# EUROPEAN PATENT APPLICATION

(11) **EP 4 640 624 A1**
(43) Date of publication of application: **29.10.2025**
(21) Application number: 23906872.9
(22) Date of filing: 14.12.2023
(51) Int. Cl.: C01B 13/11

(54) **GAS GENERATION DEVICE**

(30) Priority: 21.12.2022 JP 2022204359; 21.12.2022 JP 2022204382
(71) Applicant: EBARA CORPORATION, Ota-ku, Tokyo 144-8510 (JP)
(72) Inventor: OZAWA, Suguru, Tokyo 144-8510 (JP); ARAKI, Yuji, Tokyo 144-8510 (JP); NAKAGAWA, Yoichi, Tokyo 144-8510 (JP); KIMURA, Risa, Tokyo 144-8510 (JP)
(74) Representative: Pritzlaff, Stefanie Lydia
(86) International application number: PCT/JP2023/044762
(87) International publication number: WO 2024/135507

(57) **Abstract**

A plurality of trench grooves (8) are formed on a first electrode (6) of a gas generation device (1), and a discharge space (12) formed between a first electrode surface (7) and a second electrode surface (11) is connected to a gas introducing space (17) for introducing material gas through a material gas supply inlet (4). A ratio P/D of a pitch P of the trench grooves (8) to a diameter D of the first electrode (6) is set at 0.0020 to 0.0150, and a ratio VT/VG of a volume VT of a trench space formed by the trench grooves (8) to a volume VG of the gas introducing space (17) is set at 0.016 to 0.203.

## Description

### Technical Field

The present invention relates to a gas generation device that generates generated gas (for example, ozone gas) by producing discharge between electrodes.

### Background Art

Conventionally, ozone production devices that generate ozone gas by producing discharge between electrodes have been known. For example, a conventional ozone production device includes a pair of electrodes having electrode surfaces opposed to each other, a high-voltage AC power supply that applies a high voltage across the pair of electrodes, a dielectric body arranged between the opposed electrode surfaces, and a gas flow channel for flowing raw material gas between the opposed electrode surfaces, and at least one of the electrode surfaces of the pair of electrodes includes many grooves extending substantially parallel to one another. The raw material gas is caused to flow in a direction traversing the many grooves in a space between the many grooves and the dielectric body, which can raise the efficiency of ozone gas production to produce a high concentration of ozone gas (for example, see Patent Literature 1).

However, there has been recently a need for further raising the efficiency of generated gas (for example, ozone gas) production to generate a higher concentration of generated gas at the same voltage or to produce the same concentration of generated gas at a smaller voltage.

### Citation List

### Patent Literature

Patent Literature 1: Japanese Patent No. 4095758

### Summary of Invention

### Technical Problem

The present invention has been made under the above-described circumstances. An object of the present invention is to provide a gas generation device that can further raise the efficiency of generated gas production.

### Solution to Problem

A first aspect of the present invention is a gas generation device, and this gas generation device includes: a first electrode having a first electrode surface; a second electrode arranged on an outer side of the first electrode and having a second electrode surface opposed to the first electrode surface; a discharge space formed between the first electrode surface and the second electrode surface; a material gas supply inlet for supplying the discharge space with material gas; and a generated gas delivery outlet for delivering, to outside the device, generated gas generated from the material gas due to discharge produced in the discharge space when a voltage is applied across the first electrode surface and the second electrode surface, in which a plurality of trench grooves are formed on the first electrode, the discharge space is connected to a gas introducing space for introducing the material gas through the material gas supply inlet, a ratio P/D of a pitch P of the trench grooves to a diameter D of the first electrode is set at 0.0020 to 0.0150, and a ratio VT/VG of a volume VT of the trench space formed by the trench grooves to a volume VG of the gas introducing space is set at 0.016 to 0.203.

Another aspect of the present invention is a gas generation device, and this gas generation device includes: a first electrode having a first electrode surface; a second electrode arranged on an outer side of the first electrode and having a second electrode surface opposed to the first electrode surface; a discharge space formed between the first electrode surface and the second electrode surface; a material gas supply inlet for supplying the discharge space with material gas; a generated gas delivery outlet for delivering, to outside the device, generated gas generated from the material gas due to discharge produced in the discharge space when a voltage is applied across the first electrode surface and the second electrode surface; and a base member arranged on an outer side of the second electrode, in which a cooling flow channel through which a cooling medium is caused to flow is formed in the base member, the cooling flow channel includes an entrance part through which the cooling medium flows into the base member, an exit part through which the cooling medium flows out of the base member, and a cooling part provided between the entrance part and the exit part, a ratio d1/d2 of a flow channel diameter d1 of the entrance part to a flow channel diameter d2 of the cooling part is set at 0.25 to 1.0 as seen in cross section of the flow channel, and a ratio d2/d3 of the flow channel diameter d2 of the cooling part to a flow channel diameter d3 of the exit part is set at 1.0 to 4.0 as seen in cross section of the flow channel.

Another aspect of the present invention is a gas generation device, and this gas generation device includes: a first electrode having a first electrode surface; a second electrode arranged on an outer side of the first electrode and having a second electrode surface opposed to the first electrode surface; a discharge space formed between the first electrode surface and the second electrode surface; a material gas supply inlet for supplying the discharge space with material gas; a generated gas delivery outlet for delivering, to outside the device, generated gas generated from the material gas due to discharge produced in the discharge space when a voltage is applied across the first electrode surface and the second electrode surface; and a base member arranged on an outer side of the second electrode, in which a cooling flow channel through which a cooling medium is caused to flow is formed in the base member, the cooling flow channel includes an entrance part through which the cooling medium flows into the base member, an exit part through which the cooling medium flows out of the base member, and a cooling part provided between the entrance part and the exit part, and a ratio S1/S2 of an area S1 of the cooling part of the cooling flow channel to an area S2 of the first electrode is set at 0.45 to 0.93 as seen in plan view.

As will be described below, other aspects are involved in the present invention. Therefore, the disclosure of this invention is intended to provide some aspects of the present invention, and is not intended to restrict the scope of the invention stated and claimed herein.

### Brief Description of Drawings

[Figure 1] Figure 1 is an explanatory diagram (sectional side view) of a gas generation device in an embodiment of the present invention.
[Figure 2] Figure 2 is an explanatory diagram (plan view) showing a flow of gas in the embodiment of the present invention.
[Figure 3] Figure 3 is an explanatory diagram of a pitch P of trench grooves and a diameter D of a first electrode in the embodiment of the present invention.
[Figure 4] Figure 4 is an explanatory diagram of a volume VT of the trench grooves and a volume VG of a gas introducing space in the embodiment of the present invention.
[Figure 5] Figure 5 is a graph showing efficiency of ozone gas production in the embodiment of the present invention.
[Figure 6] Figure 6 is a diagram (plan view) showing an example of a cooling flow channel in the embodiment of the present invention.
[Figure 7] Figure 7 is a diagram (plan view) showing another example of the cooling flow channel in the embodiment of the present invention.
[Figure 8] Figure 8 is a diagram (plan view) showing another example of the cooling flow channel in the embodiment of the present invention.
[Figure 9] Figure 9 is a diagram (plan view) showing another example of the cooling flow channel in the embodiment of the present invention.
[Figure 10] Figure 10 is an explanatory diagram of a second electrode in the embodiment of the present invention.
[Figure 11] Figure 11 shows perspective views of shim members in the embodiment of the present invention.
[Figure 12] Figure 12 is a diagram (plan view) showing an example of measurement positions (nine spots) in the embodiment of the present invention.
[Figure 13] Figure 13 is an explanatory diagram of a thickness c of a selected shim member in the embodiment of the present invention.
[Figure 14] Figure 14 is a flow chart when an interelectrode distance is adjusted in the embodiment of the present invention.
[Figure 15] Figure 15 is a diagram (plan view) showing another example of the first electrode.

### Description of Embodiment

Detailed description of the present invention will be given below. However, the following detailed description and the appended drawings do not limit the invention.

A gas generation device of the present invention includes: a first electrode having a first electrode surface; a second electrode arranged on an outer side of the first electrode and having a second electrode surface opposed to the first electrode surface; a discharge space formed between the first electrode surface and the second electrode surface; a material gas supply inlet for supplying the discharge space with material gas; and a generated gas delivery outlet for delivering, to outside the device, generated gas generated from the material gas due to discharge produced in the discharge space when a voltage is applied across the first electrode surface and the second electrode surface, in which a plurality of trench grooves are formed on the first electrode, the discharge space is connected to a gas introducing space for introducing the material gas through the material gas supply inlet, a ratio P/D of a pitch P of the trench grooves to a diameter D of the first electrode is set at 0.0020 to 0.0150, and a ratio VT/VG of a volume VT of the trench space formed by the trench grooves to a volume VG of the gas introducing space is set at 0.016 to 0.203.

With this configuration, the pitch P of the trench grooves is set to be smaller than the diameter D of the first electrode, which can increase portions (apexes of ridges formed on the first electrode by the trench grooves) at which ozone gas is produced. This can raise the efficiency of ozone gas production. In other words, a higher concentration of ozone gas can be produced at the same voltage, or the same concentration of ozone gas can be produced at a smaller voltage.

In addition, the volume VT of the trench space is set to be smaller than the volume VG of the gas introducing space. Thus, a pressure loss occurs when the material gas flows into the trench space from the gas introducing space. The material gas thereby flows into the trench space after charging the gas introducing space, which can reduce production of unbalance (biased flow) in the flow of the material gas. Therefore, production of local discharge at a portion where material gas is scarce can be avoided. This can avoid decomposition of the generated gas resulting from production of local discharge, and as a result, the efficiency of ozone gas production can be raised. In other words, a higher concentration of ozone gas can be produced at the same voltage, or the same concentration of ozone gas can be produced at a smaller voltage. The ability to reduce production of unbalance (biased flow) in the flow of the material gas can also avoid damage on the electrodes resulting from production of local discharge.

In addition, in the gas generation device of the present invention, the ratio P/D of the pitch P of the trench grooves to the diameter D of the first electrode may be set at 0.0023 to 0.0055, and the ratio VT/VG of the volume VT of the trench space formed by the trench grooves to the volume VG of the gas introducing space may be set at 0.018 to 0.176.

With this configuration, the pitch P of the trench grooves is set to be still smaller than the diameter D of the first electrode, which can further increase the portions (the apexes of the ridges formed on the first electrode by the trench grooves) at which ozone gas is produced. This can further raise the efficiency of ozone gas production. In addition, the volume VT of the trench space is set to be still smaller than the volume VG of the gas introducing space, which can cause a larger pressure loss to occur when the material gas flows into the trench space from the gas introducing space. This can further raise the efficiency of ozone gas production.

In addition, in the gas generation device of the present invention, the first electrode and the second electrode may have a circular shape as seen in plan view, the plurality of trench grooves may be arranged concentrically as seen in plan view, the discharge space may have a circular shape as seen in plan view, and the gas introducing space may be arranged on a radially outer side of the discharge space as seen in plan view.

With this configuration, the material gas flows toward a radially inner side into the discharge space and the trench space after charging the gas introducing space arranged on the radially outer side of the discharge space, which can reduce production of unbalance (biased flow) in the flow of the material gas. This can avoid decomposition of the generated gas resulting from production of local discharge, and as a result, the efficiency of ozone gas production can be raised. The ability to reduce production of unbalance (biased flow) in the flow of the material gas can also avoid damage on the electrodes resulting from production of local discharge.

A gas generation device of the present invention includes: a first electrode having a first electrode surface; a second electrode arranged on an outer side of the first electrode and having a second electrode surface opposed to the first electrode surface; a discharge space formed between the first electrode surface and the second electrode surface; a material gas supply inlet for supplying the discharge space with material gas; a generated gas delivery outlet for delivering, to outside the device, generated gas generated from the material gas due to discharge produced in the discharge space when a voltage is applied across the first electrode surface and the second electrode surface; and a base member arranged on an outer side of the second electrode, in which a cooling flow channel through which a cooling medium is caused to flow is formed in the base member, the cooling flow channel includes an entrance part through which the cooling medium flows into the base member, an exit part through which the cooling medium flows out of the base member, and a cooling part provided between the entrance part and the exit part, a ratio d1/d2 of a flow channel diameter d1 of the entrance part to a flow channel diameter d2 of the cooling part is set at 0.25 to 1.0 as seen in cross section of the flow channel, and a ratio d2/d3 of the flow channel diameter d2 of the cooling part to a flow channel diameter d3 of the exit part is set at 1.0 to 4.0 as seen in cross section of the flow channel.

With this configuration, the flow channel diameter d1 of the entrance part of the cooling flow channel is set to be smaller than the flow channel diameter d2 of the cooling part, and the flow channel diameter d2 of the cooling part of the cooling flow channel is set to be larger than the flow channel diameter d3 of the exit part. Thus, a high cooling effect can be obtained in the cooling part of the cooling flow channel, and a pressure loss of the cooling medium between the entrance part and the exit part of the cooling flow channel can be minimized.

A gas generation device of the present invention includes: a first electrode having a first electrode surface; a second electrode arranged on an outer side of the first electrode and having a second electrode surface opposed to the first electrode surface; a discharge space formed between the first electrode surface and the second electrode surface; a material gas supply inlet for supplying the discharge space with material gas; a generated gas delivery outlet for delivering, to outside the device, generated gas generated from the material gas due to discharge produced in the discharge space when a voltage is applied across the first electrode surface and the second electrode surface; and a base member arranged on an outer side of the second electrode, in which a cooling flow channel through which a cooling medium is caused to flow is formed in the base member, the cooling flow channel includes an entrance part through which the cooling medium flows into the base member, an exit part through which the cooling medium flows out of the base member, and a cooling part provided between the entrance part and the exit part, and a ratio S1/S2 of an area S1 of the cooling part of the cooling flow channel to an area S2 of the first electrode is set at 0.45 to 0.93 as seen in plan view.

With this configuration, the area S1 of the cooling part of the cooling flow channel is set to be larger than the area S2 of the first electrode. Thus, a high cooling effect can be obtained in the cooling part of the cooling flow channel.

In addition, in the gas generation device of the present invention, the base member may have a circular shape as seen in plan view, and the cooling part of the cooling flow channel may include a first partial flow channel connected to the entrance part and having an arc shape concentric with the base member, a second partial flow channel connected to the first partial flow channel and arranged farther radially inward than the first partial flow channel, the second partial flow channel having a radius of curvature smaller than that of the first partial flow channel and having an arc shape concentric with the base member, and a third partial flow channel connected to the second partial flow channel and arranged farther radially outward than the second partial flow channel, the third partial flow channel having a radius of curvature larger than that of the second partial flow channel and having an arc shape concentric with the base member.

With this configuration, in the cooling part of the cooling flow channel, the cooling medium flows from the first partial flow channel to the radially inner side by way of the second partial flow channel, and flows from the second partial flow channel to the radially outer side by way of the third partial flow channel. At this time, the entirety of the base member having a circular shape can be cooled uniformly because the first partial flow channel, the second partial flow channel, and the third partial flow channel have an arc shape concentric with the base member.

In addition, in the gas generation device of the present invention, the cooling part of the cooling flow channel may further include a fourth partial flow channel connected to the third partial flow channel and arranged farther radially outward than the third partial flow channel, the fourth partial flow channel having a radius of curvature larger than that of the third partial flow channel and having an arc shape concentric with the base member, and a fifth partial flow channel connected to the fourth partial flow channel and arranged farther radially outward than the fourth partial flow channel, the fifth partial flow channel having a radius of curvature larger than that of the fourth partial flow channel and having an arc shape concentric with the base member.

With this configuration, in the cooling part of the cooling flow channel, the cooling medium further flows from the third partial flow channel to the radially outer side by way of the fourth partial flow channel, and flows from the fourth partial flow channel to the radially outer side by way of the fifth partial flow channel. At this time, the entirety of the base member having a circular shape can be cooled uniformly because the first partial flow channel, the second partial flow channel, the third partial flow channel, the fourth partial flow channel, and the fifth partial flow channel have an arc shape concentric with the base member.

A gas generation device of the present invention is a gas generation device including a central member and a pair of base members arranged on both upper and lower sides of the central member, in which the central member includes a first electrode having a first electrode surface on each of both the upper and lower sides, the base members each include a second electrode having a second electrode surface opposed to the first electrode surface, a discharge space is formed between the first electrode surface and the second electrode surface, the central member includes a material gas supply inlet for supplying the discharge space with the material gas, and a generated gas delivery outlet for delivering, to outside the device, generated gas generated from the material gas due to discharge produced in the discharge space when a voltage is applied across the first electrode surface and the second electrode surface, the second electrode is composed of a dielectric plate having a front surface to be the second electrode surface and a conductive film formed at a position corresponding to the first electrode on a rear surface of the dielectric plate opposite to the second electrode surface, a shim member insertion part in which a shim member for adjusting an interelectrode distance between the first electrode surface and the second electrode surface into a predetermined reference distance is to be inserted is formed between the central member and each of the base members, the shim member to be inserted in the shim member insertion part is selected from among a plurality of shim members having thicknesses different from one another based on a result of measurement of a distance from an end surface of the shim member insertion part that faces a corresponding one of the base members to the second electrode surface.

With this configuration, for each of the pair of base members arranged on both the upper and lower sides of the central member, a shim member (a shim member selected based on the result of measurement of the distance from the end surface of the shim member insertion part that faces a corresponding one of the base members to the second electrode surface) is inserted in the shim member insertion part between the central member and the corresponding base member, and the interelectrode distance between the first electrode surface and the second electrode surface is adjusted so as to be the predetermined reference distance. The interelectrode distances on both the upper and lower sides can be matched in this manner, and as a result, the efficiency of ozone gas production can be raised. In other words, a higher concentration of ozone gas can be produced at the same voltage, or the same concentration of ozone gas can be produced at a smaller voltage.

In addition, in the gas generation device of the present invention, a shim member having a thickness equal to the sum of the distance from the end surface of the shim member insertion part that faces the corresponding base member to the second electrode surface and the reference distance may be selected as the shim member to be inserted in the shim member insertion part from among the plurality of shim members having thicknesses different from one another.

With this configuration, the shim member having a thickness equal to the sum of the distance from the end surface of the shim member insertion part that faces the corresponding base member to the second electrode surface and the reference distance is selected as the shim member to be inserted in the shim member insertion part from among the plurality of shim members having thicknesses different from one another. The interelectrode distance between the first electrode surface and the second electrode surface can thereby be adjusted so as to be the predetermined reference distance.

A method of the present invention is a method for adjusting an interelectrode distance, which is to be performed in the above-described gas generation device, the method including the steps of: performing measurement of a distance from an end surface of a first shim member insertion part formed between one base member of the pair of base members and the central member, the end surface facing the base member, to the second electrode surface; selecting a first shim member by which the interelectrode distance will be the reference distance from among the plurality of shim members having thicknesses different from one another based on a result of the measurement; inserting the selected first shim member in the first shim member insertion part between the central member and the one base member; performing measurement of a distance from an end surface of a second shim member insertion part formed between the other base member of the pair of base members and the central member, the end surface facing the base member, to the second electrode surface; selecting a second shim member by which the interelectrode distance will be the reference distance from among the plurality of shim members having thicknesses different from one another based on a result of the measurement; and inserting the selected second shim member in the second shim member insertion part between the central member and the other base member.

Also by this method, for each of the pair of base members arranged on both the upper and lower sides of the central member, a shim member (a shim member selected based on a result of the measurement of the distance from the end surface of the shim member insertion part that faces a corresponding one of the base members to the second electrode surface) is inserted in the shim member insertion part between the central member and the corresponding base member, and the interelectrode distance between the first electrode surface and the second electrode surface is adjusted so as to be the predetermined reference distance, similarly to the above-described device. The interelectrode distances on both the upper and lower sides can be matched in this manner, and as a result, the efficiency of ozone gas production can be raised. In other words, a higher concentration of ozone gas can be produced at the same voltage, or the same concentration of ozone gas can be produced at a smaller voltage.

A gas generation device of the present invention includes: a central member including a first electrode having a first electrode surface; a base member including a second electrode having a second electrode surface opposed to the first electrode surface; and a discharge space formed between the first electrode surface and the second electrode surface, in which the central member includes a material gas supply inlet for supplying the discharge space with material gas and a generated gas delivery outlet for delivering, to outside the device, generated gas generated from the material gas due to discharge produced in the discharge space when a voltage is applied across the first electrode surface and the second electrode surface, the second electrode is composed of a dielectric plate having a front surface to be the second electrode surface and a conductive film formed at a position corresponding to the first electrode on a rear surface of the dielectric plate opposite to the second electrode surface, a sealing member is arranged between the dielectric plate and the central member, the material gas supply inlet is arranged on an outer side of the first electrode, the generated gas delivery outlet is arranged in a central part of the first electrode, and the sealing member is arranged on the outer side of the first electrode.

With this configuration, the material gas supply inlet is arranged on the outer side of the first electrode, and the generated gas delivery outlet is arranged in the central part of the first electrode. Thus, the material gas flows in the direction from the outside toward the central part. The conductive film of the second electrode is formed at the position corresponding to the first electrode (not formed on the outer side of the first electrode). Therefore, discharge is produced at the position corresponding to the first electrode in the discharge space, and the generated gas is generated from the material gas. Discharge is not produced on the outer side of the first electrode, nor is the generated gas generated from the material gas. In this case, the generated gas can be kept from being produced in the vicinity of the sealing member because the sealing member is arranged on the outer side of the first electrode, which can prevent the sealing member from being corroded by the generated gas.

In addition, in the gas generation device of the present invention, the first electrode and the second electrode may have a circular shape, the material gas supply inlet may be arranged on a radially outer side of the first electrode, the generated gas delivery outlet may be arranged on a radially inner side of the first electrode, and the sealing member may be arranged on the radially outer side of the first electrode.

With this configuration, the first electrode and the second electrode have a circular shape, the material gas supply inlet is arranged on the radially outer side of the first electrode, and the generated gas delivery outlet is arranged on the radially inner side of the first electrode. Thus, the material gas flows in the direction from the radially outer side toward the radially inner side. Discharge is not produced on the radially outer side of the first electrode, nor is the generated gas generated from the material gas. In this case, the generated gas can be kept from being produced in the vicinity of the sealing member because the sealing member is arranged on the radially outer side of the first electrode, which can prevent the sealing member from being corroded by the generated gas.

The present invention can further raise the efficiency of ozone production.

### (Embodiment)

Hereinafter, a gas generation device of an embodiment of the present invention will be described using the drawings. In the present embodiment, a case of a gas generation device (ozone gas generation device) to be used for generating ozone gas will be shown as an example.

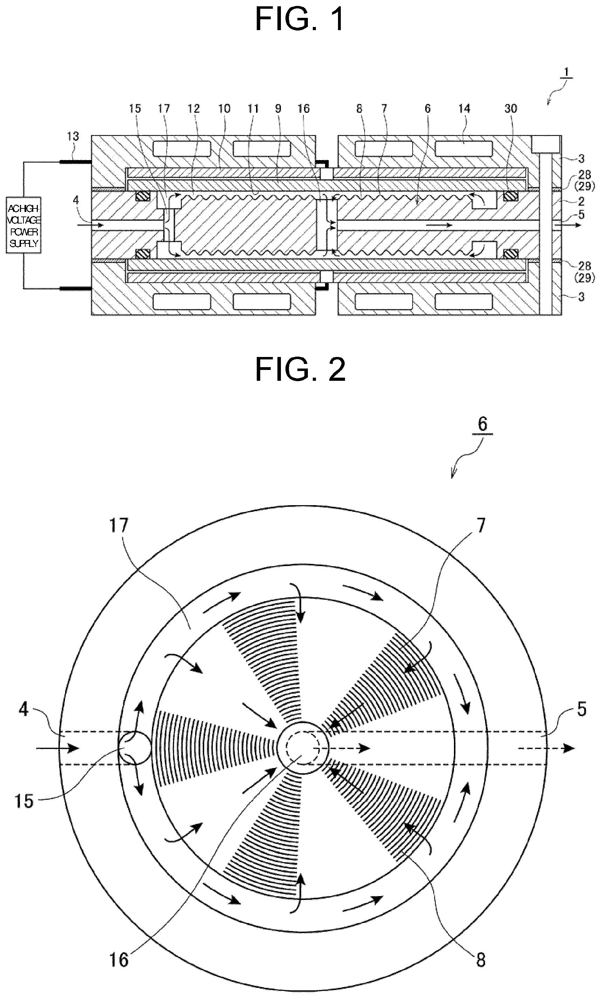

A configuration of the gas generation device of the embodiment of the present invention will be described with reference to the drawings. Figure 1 is an explanatory diagram (sectional side view) of the gas generation device of the present embodiment. As shown in Figure 1, a gas generation device 1 includes a central member 2 arranged at the center of the device and having a circular shape as seen in plan view, and a pair of base members 3 arranged on the outer sides (both the upper and lower sides in Figure 1) of the central member 2 so as to sandwich the central member 2 and having a circular shape as seen in plan view.

The central member 2 is provided with a material gas supply inlet 4 through which material gas (oxygen-containing gas) of ozone gas is supplied and a generated gas delivery outlet 5 from which ozone gas generated from the material gas is delivered. In addition, a first electrode 6 having a circular shape as seen in plan view is provided on a surface of the central member 2. In the present embodiment, the first electrode 6 is a low-voltage side electrode and is connected to the ground. Electrode surfaces (first electrode surfaces 7) of the first electrode 6 are provided on both surfaces on the outer sides (the upper and lower sides in Figure 1) of the first electrode **6.** In addition, a plurality of trench grooves 8 arranged concentrically as seen in plan view are formed on the first electrode surfaces 7 (see Figure 2).

The base member 3 includes a second electrode 9 having a circular shape as seen in plan view and an insulating plate 10 arranged on the outer side of the second electrode 9 and having a circular shape as seen in plan view. An electrode surface (a second electrode surface 11) of the second electrode 9 is provided to be opposed to the first electrode 6, and a discharge space 12 is formed between the first electrode surface 7 and the second electrode surface 11. In the present embodiment, the second electrode 9 is a high-voltage side electrode, to which a cable 13 for applying a voltage is connected. For example, the second electrode 9 is formed of a dielectric body such as sapphire. The insulating plate 10 is formed of an insulator such as alumina.

A cooling flow channel 14 through which a cooling medium (for example, cooling water) is caused to flow is formed in the base member 3, and the base member 3 is provided with a supply inlet and a discharge outlet for the cooling medium (not shown). The cooling flow channel 14 is arranged on the outer side of the insulating plate **10.** In this case, the second electrode 9 and the insulating plate 10 are in contact with each other, and the insulating plate 10 and the base member 3 are in contact with each other. Thus, a cooling effect of the cooling flow channel 14 can be transferred to the second electrode 9 via the insulating plate 10 to cool the second electrode 9.

As shown in Figure 2, a material gas outlet 15 communicating with the material gas supply inlet 4 is provided in an outer edge of the first electrode 6. A generated gas inlet 16 communicating with the generated gas delivery outlet 5 is also provided in a central part of the first electrode **6.** Moreover, the discharge space 12 is connected to a gas introducing space 17 for introducing the material gas supplied through the material gas supply inlet 4 (the material gas outlet 15). In the present embodiment, the discharge space 12 has a circular shape as seen in plan view, and the gas introducing space 17 is arranged on the radially outer side of the discharge space 12 as seen in plan view. In this case, the gas introducing space 17 is formed annularly as seen in plan view so as to surround the first electrode 6.

As shown by arrows in Figure 2, the material gas supplied through the material gas supply inlet 4 is supplied from the material gas outlet 15 into the central member 2, is introduced into the gas introducing space 17, and then flows from the gas introducing space 17 so as to traverse the space (the discharge space 12) between the first electrode surface 7 and the second electrode surface 11. Then, when a voltage is applied across the first electrode surface 7 and the second electrode surface 11, discharge is produced in the discharge space 12, and ozone gas is generated from the material gas. The generated ozone gas is delivered from the generated gas inlet 16 to outside the device by way of the generated gas delivery outlet 5.

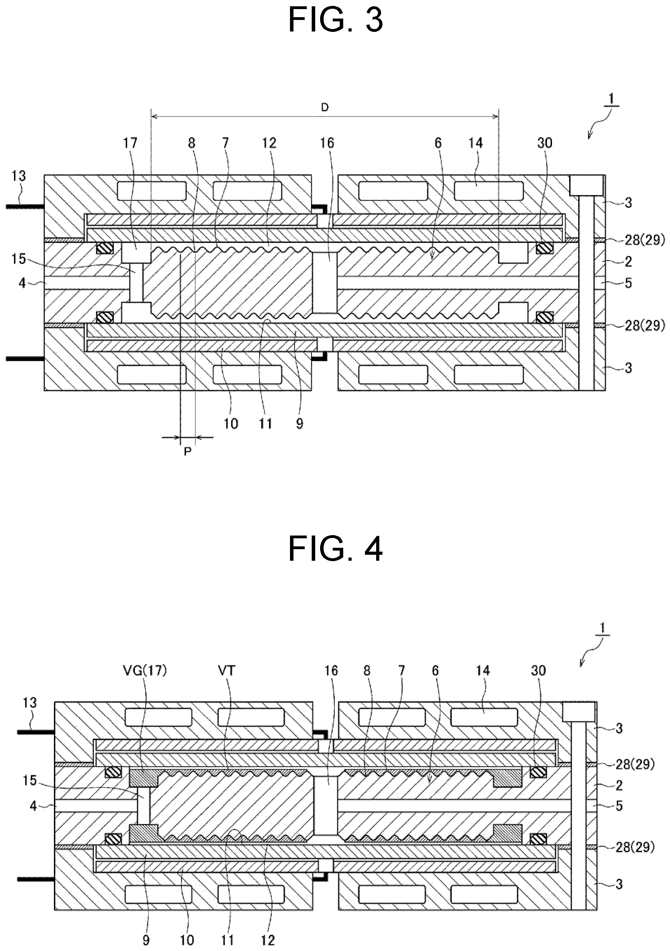

Figure 3 is an explanatory diagram of the pitch P of the trench grooves 8 and the diameter D of the first electrode 6. In the present embodiment, the pitch P of the trench grooves 8 is set at 0.30 mm to 1.50 mm, and more preferably is set at 0.30 mm to 0.60 mm. Herein, the diameter D of the first electrode 6 is 100 mm to 150 mm, and more preferably is 110 mm to 130 mm. Therefore, in the present embodiment, the ratio P/D of the pitch P of the trench grooves 8 to the diameter D of the first electrode 6 is set at 0.0020 to 0.0150, and more preferably is set at 0.0023 to 0.0055.

Figure 4 is an explanatory diagram of the volume VT of the trench grooves 8 and the volume VG of the gas introducing space 17. In the present embodiment, the volume VT of the trench space formed by the trench grooves 8 is set at 0.21 cm³ to 3.91 cm³, and more preferably is set at 0.25 cm³ to 2.94 cm³. In addition, the volume VG of the gas introducing space 17 is set at 12.8 cm³ to 19.3 cm³, and more preferably is set at 14.0 cm³ to 16.7 cm³. Therefore, in the present embodiment, the ratio VT/VG of the volume VT of the trench space formed by the trench grooves 8 to the volume VG of the gas introducing space 17 is set at 0.016 to 0.203, more preferably is set at 0.018 to 0.176, and still more preferably is set at 0.019 to 0.163.

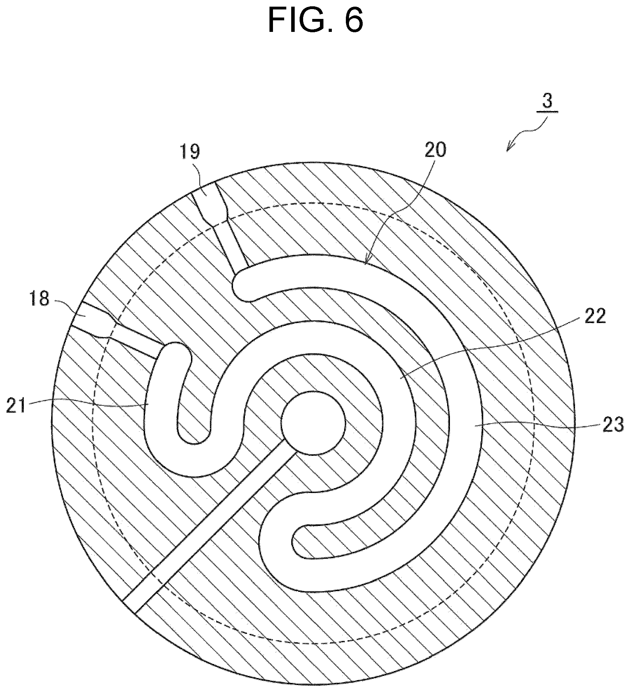

Figure 6 is a diagram (plan view) showing an example of the cooling flow channel 14. As shown in Figure 6, the cooling flow channel 14 includes an entrance part 18 through which a cooling medium flows into the base member 3, an exit part 19 through which the cooling medium flows out of the base member 3, and a cooling part 20 provided between the entrance part 18 and the exit part 19. The cooling part 20 includes a first partial flow channel 21 connected to the entrance part 18, a second partial flow channel 22 connected to the first partial flow channel 21, and a third partial flow channel 23 connected to the second partial flow channel 22. Herein, the first partial flow channel 21, the second partial flow channel 22, and the third partial flow channel 23 are all have an arc shape concentric with the base member 3. In addition, the second partial flow channel 22 is arranged farther radially inward from the first partial flow channel 21 and has a radius of curvature smaller than that of the first partial flow channel 21, and the third partial flow channel 23 is arranged farther radially outward than the second partial flow channel 22 and has a radius of curvature larger than that of the second partial flow channel 22.

In the example of Figure 6, as seen in cross section of the flow channel, the flow channel diameter d1 of the entrance part 18 of the cooling flow channel 14 is 5 mm to 10 mm, the flow channel diameter d2 of the cooling part 20 is 10 mm to 15 mm, and the flow channel diameter d3 of the exit part 19 of the cooling flow channel 14 is 5 mm to 10 mm. In addition, as seen in plan view, the area S1 of the cooling part 20 is 35.8 to 80.7 cm², and the area S2 of the first electrode 6 is 78.5 cm² to 176.6 cm².

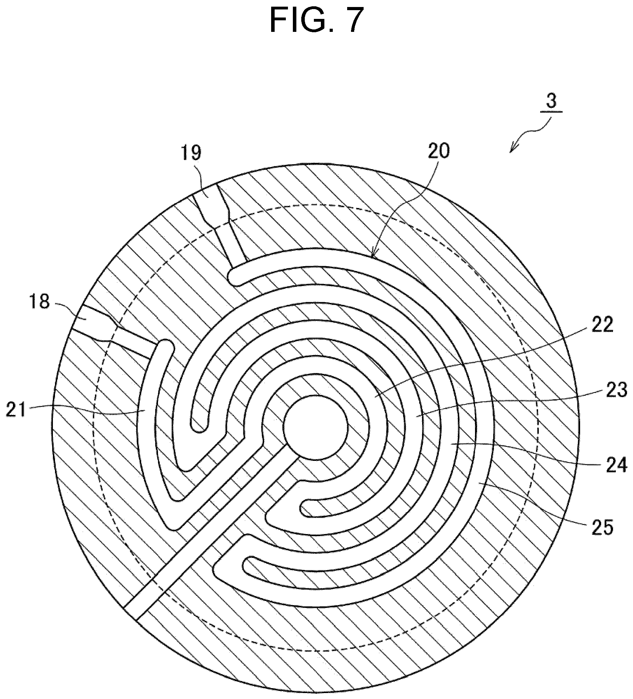

Figure 7 is a diagram (plan view) showing another example of the cooling flow channel 14. In the example of Figure 7, the cooling part 20 further includes a fourth partial flow channel 24 connected to the third partial flow channel 23 and a fifth partial flow channel 25 connected to the fourth partial flow channel 24. Herein, the fourth partial flow channel 24 and the fifth partial flow channel 25 both have an arc shape concentric with the base member 3. In addition, the fourth partial flow channel 24 is arranged farther radially outward than the third partial flow channel 23 and has a radius of curvature larger than that of the third partial flow channel 23, and the fifth partial flow channel 25 is arranged farther radially outward than the fourth partial flow channel 24 and has a radius of curvature larger than that of the fourth partial flow channel 24.

In the example of Figure 7, as seen in cross section of the flow channel, the flow channel diameter d1 of the entrance part 18 of the cooling flow channel 14 is 5 mm to 10 mm, the flow channel diameter d2 of the cooling part 20 is 5 mm to 10 mm, and the flow channel diameter d3 of the exit part 19 of the cooling flow channel 14 is 5 mm to 10 mm**.** In addition, as seen in plan view, the area S1 of the cooling part 20 is 38.1 cm² to 85.7 cm², and the area S2 of the first electrode 6 is 78.5 cm² to 176.6 cm².

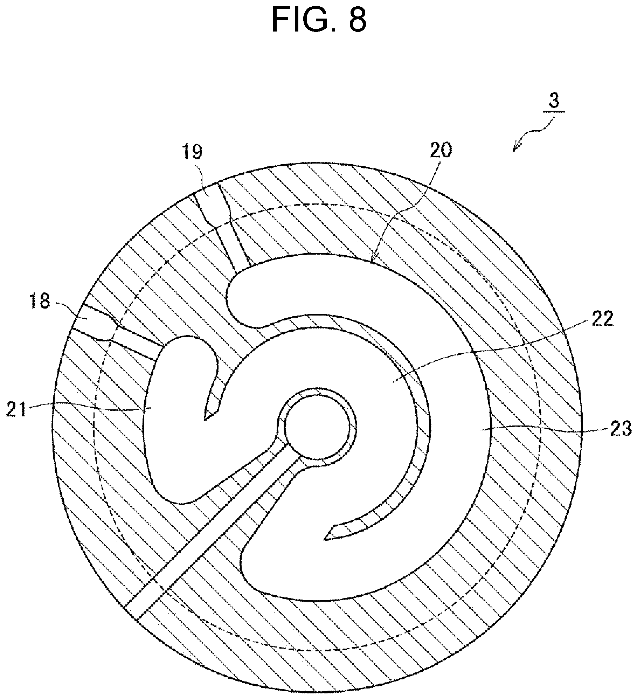

Figure 8 is a diagram (plan view) showing another example of the cooling flow channel 14. In the example of Figure 8, the flow channel diameter d1 of the entrance part 18 of the cooling flow channel 14 is 5 mm to 10 mm, the flow channel diameter d2 of the cooling part 20 is 15 mm to 25 mm, and the flow channel diameter d3 of the exit part 19 of the cooling flow channel 14 is 5 mm to 10 **mm.** In addition, as seen in plan view, the area S1 of the cooling part 20 is 55.0 cm² to 123.8 cm², and the area S2 of the first electrode 6 is 78.5 cm² to 176.6 cm².

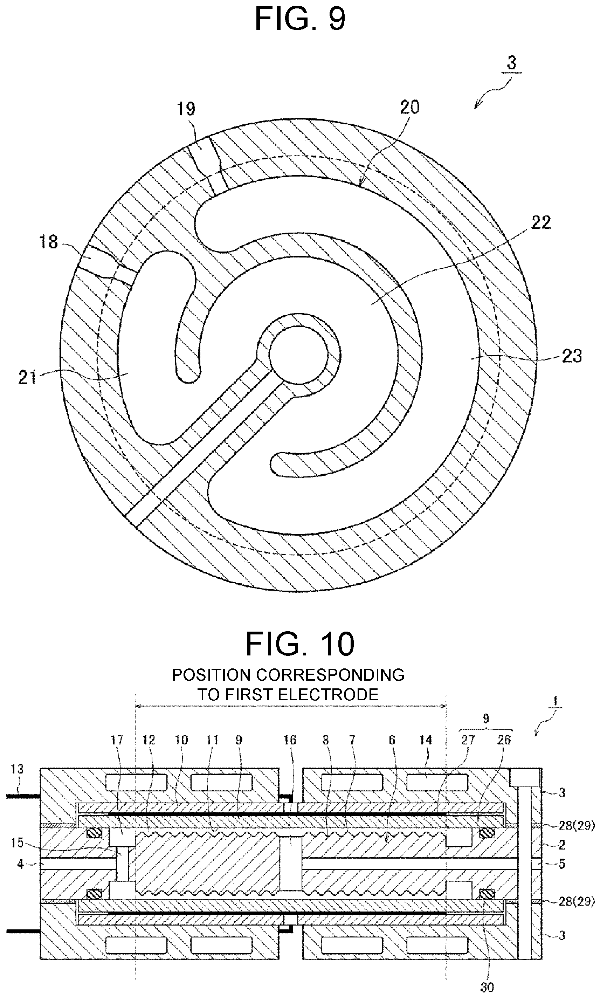

Figure 9 is a diagram (plan view) showing another example of the cooling flow channel 14. In the example of Figure 9, the flow channel diameter d1 of the entrance part 18 of the cooling flow channel 14 is 5 mm to 10 mm, the flow channel diameter d2 of the cooling part 20 is 20 mm to 25 mm, and the flow channel diameter d3 of the exit part 19 of the cooling flow channel 14 is 5 mm to 10 **mm.** In addition, as seen in plan view, the area S1 of the cooling part 20 is 72.5 cm² to 163.0 cm², and the area S2 of the first electrode 6 is 78.5 cm² to 176.6 cm².

In other words, in the present embodiment, the ratio d1/d2 of the flow channel diameter d1 of the entrance part 18 to the flow channel diameter d2 of the cooling part 20 is set at 0.25 to 1.0, and more preferably is set at 0.27 to 1.0 as seen in cross section of the flow channel. In addition, the ratio d2/d3 of the flow channel diameter d2 of the cooling part 20 to the flow channel diameter d3 of the exit part 19 is set at 1.0 to 4.0, and more preferably is set at 1.0 to 3.66. In addition, the ratio S1/S2 of the area S1 of the cooling part 20 of the cooling flow channel 14 to the area S2 of the first electrode 6 is set at 0.45 to 0.93 as seen in plan view.

Figure 10 is an explanatory diagram of the second electrode 9 in the present embodiment. As shown in Figure 10, the second electrode 9 is composed of a dielectric plate 26 having a front surface to be the second electrode surface 11 and a conductive film 27 formed at a position corresponding to the first electrode 6 on a rear surface of the dielectric plate 26 opposite to the second electrode surface 11. In addition, a shim member insertion part 29 in which the shim member 28 is to be inserted is formed between the central member 2 and each of the base members 3.

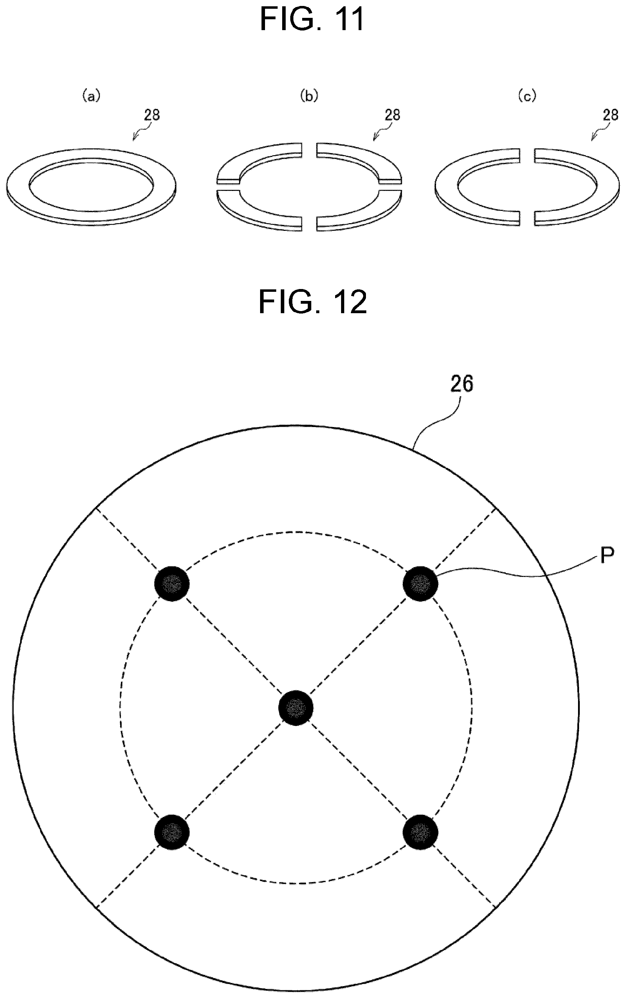

Figure 11 shows perspective views of the shim member 28. As shown in Figure 11(a), the shim member 28 is a member having an annular shape and configured to be inserted in the shim member insertion part 29 between the central member 2 and each of the base members 3 to adjust the interelectrode distance between the first electrode surface 7 and the second electrode surface 11 into a predetermined reference distance. In the present embodiment, a plurality of shim members 28 having thicknesses different from one another are prepared in advance, and the shim member 28 to be inserted in the shim member insertion part 29 is selected from among the plurality of shim members 28 prepared in advance based on a result of measurement of the distance from an end surface of the shim member insertion part 29 that faces the corresponding base member 3 to the second electrode surface 11.

Figure 11(b) shows another example of the shim member 28. As shown in Figure 11(b), the shim member 28 having an annular shape may be divided into four. Figure 11(c) also shows another example of the shim member 28. As shown in Figure 11(c), the shim member 28 having an annular shape may be divided into two. The shim member 28 divided into a plurality of pieces in this manner can be used. Note that the positions at which the shim member 28 is divided and the number of divisions are not limited to this. Even the divided shim member 28 can adjust the interelectrode distance between the first electrode surface 7 and the second electrode surface 11 so as to be the predetermined reference distance when inserted in the shim member insertion part 29 between the central member 2 and each of the base members 3. In addition, even if the shim member 28 is divided, airtightness exerted by the sealing member 30 is not affected (airtightness is kept) because the shim member 28 is arranged on the outer side of a sealing member 30.

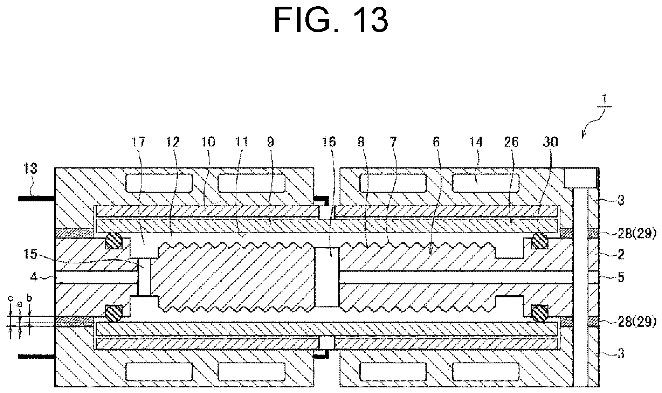

In the present embodiment, an end surface of the central member 2 that is in contact with the shim member insertion part 29 and the top of trenches are at the same height (identical plane). Hence, a distance from the dielectric plate 26 to the end surface of the central member 2 that is in contact with the shim member insertion part 29 and a distance from the dielectric plate 26 to the top of the trenches are equal. Thus, in the present embodiment, a distance a from the end surface of the shim member insertion part 29 that faces the corresponding base member 3 to the second electrode surface 11 is measured at predetermined measurement positions P (five spots in the example of Figure 12) as shown in Figure 13. Then, the shim member 28 having a thickness c equal (or a thickness proximate) to the sum of the measured distance a and a predetermined reference distance b (which is a distance from the dielectric plate 26 to the top of the trenches and which is a preset distance; for example, 0.01 mm to 0.5 mm) is selected as the shim member 28 to be inserted in the shim member insertion part 29. The measurement positions P can be a spot at the center and a plurality of spots on a circumference which is concentric with an outer shape and is smaller than the outer shape. The plurality of spots can be set at positions facing the central spot. In addition, the number of the plurality of spots is not limited to four as in the example of Figure 12, and may be a number more than four.

In addition, as shown in Figure 13, the sealing member 30 such as an o-ring is arranged between the dielectric plate 26 and the central member **2.** In the present embodiment, the material gas supply inlet 4 is arranged on the outer side of the first electrode 6, the generated gas delivery outlet 5 is arranged in the central part of the first electrode 6, and the sealing member 30 is arranged on the outer side of the first electrode **6.** More specifically, the material gas supply inlet 4 is arranged on the radially outer side of the first electrode 6, the generated gas delivery outlet 5 is arranged on the radially inner side of the first electrode 6, and the sealing member 30 is arranged on the radially outer side of the first electrode **6.**

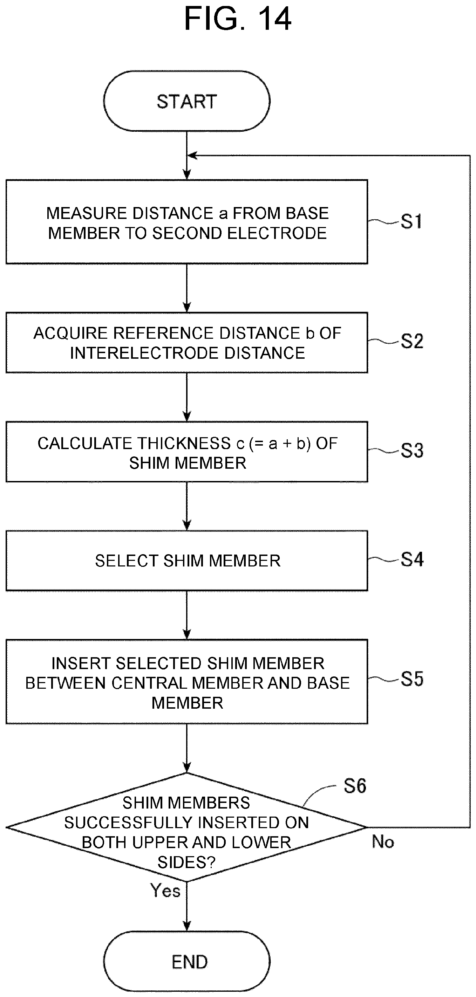

Operation of the gas generation device 1 configured as described above will be described with reference to the flow chart of Figure **14****.**

In a case in which the interelectrode distance is adjusted in the gas generation device 1 of the embodiment of the present invention, the distance a from the end surface of the shim member insertion part 29 formed between one base member 3 of the pair of base members 3 and the central member 2, the end surface facing the base member 3, to the second electrode surface 11 is first measured (S1).

Next, the shim member 28 by which the interelectrode distance will be the reference distance is selected from among the plurality of shim members 28 having thicknesses different from one another based on a result of measurement in step S1 described above. Specifically, the reference interelectrode distance b is acquired (S2), the thickness c of the shim member 28 to be inserted in the shim member insertion part 29 is calculated (S3), and the shim member 28 having a thickness equal (or a thickness proximate) to the calculated thickness c is selected (S4). Then, the shim member 28 selected in step S4 described above is inserted in the shim member insertion part 29 between the one base member 3 and the central member 2 (S5).

Thereafter, it is determined whether the shim members 28 have been inserted on both the upper and lower sides (S6). In a case in which only one of the shim members 28 has been inserted, steps S1 to S5 described above are repeated for the other shim member 28.

In other words, the distance a from the end surface of the shim member insertion part 29 formed between the other base member 3 and the central member 2, the end surface facing the base member 3, to the second electrode surface **11** is measured (S1).

Next, the shim member 28 by which the interelectrode distance will be the reference distance is selected from among the plurality of shim members 28 having thicknesses different from one another based on a result of measurement in step S1 described above. Specifically, the reference interelectrode distance b is acquired (S2), the thickness c of the shim member 28 to be inserted in the shim member insertion part 29 is calculated (S3), and the shim member 28 having a thickness equal (or a thickness proximate) to the calculated thickness c is selected (S4). Then, the shim member 28 selected in step S4 described above is inserted in the shim member insertion part 29 between the other base member 3 and the central member 2 (S5). Then, in a case in which the shim members 28 have been inserted on both the upper and lower sides, adjustment of the interelectrode distance is terminated.

With this gas generation device 1 of the present embodiment, the pitch P of the trench grooves 8 is set to be smaller than the diameter D of the first electrode 6, which can increase the portions (the apexes of the ridges formed on the first electrode 6 by the trench grooves 8) at which ozone gas is produced. This can raise the efficiency of ozone gas production. In other words, a higher concentration of ozone gas can be produced at the same voltage, or the same concentration of ozone gas can be produced at a smaller voltage.

In addition, the volume VT of the trench space is set to be smaller than the volume VG of the gas introducing space 17. Thus, a pressure loss occurs when the material gas flows into the trench space from the gas introducing space 17. The material gas thereby flows into the trench space after charging the gas introducing space 17, which can reduce production of unbalance (biased flow) in the flow of the material gas. Therefore, production of local discharge at a portion where material gas is scarce can be avoided. This can avoid decomposition of the generated gas resulting from production of local discharge, and as a result, the efficiency of ozone gas production can be raised. In other words, a higher concentration of ozone gas can be produced at the same voltage, or the same concentration of ozone gas can be produced at a smaller voltage. The ability to reduce production of unbalance (biased flow) in the flow of the material gas can also avoid damage on the electrodes resulting from production of local discharge.

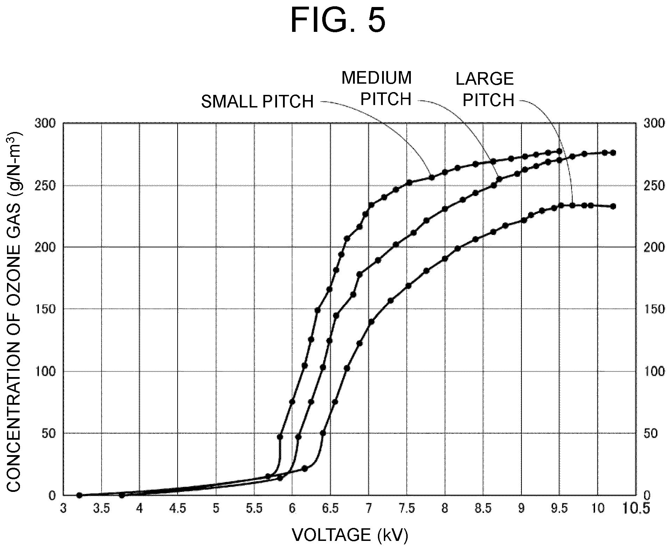

In addition, in the present embodiment, the pitch P of the trench grooves 8 is set to be smaller than the diameter D of the first electrode 6, which can further increase the portions (the apexes of the ridges formed on the first electrode 6 by the trench grooves 8) at which ozone gas is produced. This can further raise the efficiency of ozone gas production (see Figure 5). In addition, the volume VT of the trench space is set to be still smaller than the volume VG of the gas introducing space 17, which can cause a larger pressure loss to occur when the material gas flows into the trench space from the gas introducing space 17. This can further raise the efficiency of ozone gas production.

In addition, in the present embodiment, the material gas flows toward the radially inner side into the discharge space 12 and the trench space after charging the gas introducing space 17 arranged on the radially outer side of the discharge space 12, which can reduce production of unbalance (biased flow) in the flow of the material gas. This can avoid decomposition of the generated gas resulting from production of local discharge, and as a result, the efficiency of ozone gas production can be raised. The ability to reduce production of unbalance (biased flow) in the flow of the material gas can also avoid damage on the electrodes resulting from production of local discharge.

In addition, in the present embodiment, the flow channel diameter d1 of the entrance part 18 of the cooling flow channel 14 is set to be smaller than the flow channel diameter d2 of the cooling part 20, and the flow channel diameter d2 of the cooling part 20 of the cooling flow channel 14 is set to be larger than the flow channel diameter d3 of the exit part **19.** Thus, a high cooling effect can be obtained in the cooling part 20 of the cooling flow channel 14, and a pressure loss of the cooling medium between the entrance part 18 and the exit part 19 of the cooling flow channel 14 can be minimized.

In addition, in the present embodiment, the area S1 of the cooling part 20 of the cooling flow channel 14 is set to be larger than the area S2 of the first electrode **6.** Thus, a high cooling effect can be obtained in the cooling part 20 of the cooling flow channel **14.**

In addition, in the present embodiment, the cooling medium flows from the first partial flow channel 21 to the radially inner side by way of the second partial flow channel 22 and flows from the second partial flow channel 22 to the radially outer side by way of the third partial flow channel 23 in the cooling part 20 of the cooling flow channel **14.** At this time, the entirety of the base member 3 having a circular shape can be cooled uniformly because the first partial flow channel 21, the second partial flow channel 22, and the third partial flow channel 23 have an arc shape concentric with the base member **3.**

In addition, in the present embodiment, the cooling medium further flows from the third partial flow channel 23 to the radially outer side by way of the fourth partial flow channel 24 and flows from the fourth partial flow channel 24 to the radially outer side by way of the fifth partial flow channel 25 in the cooling part 20 of the cooling flow channel **14.** At this time, the entirety of the base member 3 having a circular shape can be cooled uniformly because the first partial flow channel 21, the second partial flow channel 22, the third partial flow channel 23, the fourth partial flow channel 24, and the fifth partial flow channel 25 have an arc shape concentric with the base member **3.**

In this case, the cooling flow channel 14 and wiring holes of the cable 13 are provided on an identical plane (see Figure 1). Thus, a structure in which the cooling medium is input from a side surface can save space as compared with a structure in which the cooling medium is input from above and below the base member 3. However, the cooling flow channel 14 cannot be provided in a wiring part of the cable 13. The present embodiment employs a structure in which the entirety of the base member 3 can be cooled by providing the cooling flow channel 14 as close as possible. Note that the entrance part 18 and the exit part 19 of the cooling flow channel 14 may be inverted.

In addition, in the present embodiment, for each of the pair of base members 3 arranged on both the upper and lower sides of the central member 2, the shim member 28 (the shim member 28 selected based on a result of measurement of the distance from the end surface of the shim member insertion part 29 that faces a corresponding one of the base members 3 to the second electrode surface 11) is inserted in the shim member insertion part 29 between the central member 2 and the corresponding base member 3, and the interelectrode distance between the first electrode surface 7 and the second electrode surface 11 is adjusted so as to be the predetermined reference distance. The interelectrode distances on both the upper and lower sides can be matched in this manner, and as a result, the efficiency of ozone gas production can be raised. In other words, a higher concentration of ozone gas can be produced at the same voltage, or the same concentration of ozone gas can be produced at a smaller voltage.

In addition, in the present embodiment, the shim member 28 having a thickness equal to the sum of the distance from the end surface of the shim member insertion part 29 that faces the corresponding base member 3 to the second electrode surface 11 and the reference distance is selected as the shim member 28 to be inserted in the shim member insertion part 29 from among the plurality of shim members 28 having thicknesses different from one another. The interelectrode distance between the first electrode surface 7 and the second electrode surface 11 can thereby be adjusted so as to be the predetermined reference distance.

In addition, in the present embodiment, for each of the pair of base members 3 arranged on both the upper and lower sides of the central member 2, the shim member 28 (the shim member 28 selected based on a result of measurement of the distance from the end surface of the shim member insertion part 29 that faces a corresponding one of the base members 3 to the second electrode surface 11) is inserted in the shim member insertion part 29 between the central member 2 and the corresponding base member 3, and the interelectrode distance between the first electrode surface 7 and the second electrode surface **11** is adjusted so as to be the predetermined reference distance. The interelectrode distances on both the upper and lower sides can be matched in this manner, and as a result, the efficiency of ozone gas production can be raised. In other words, a higher concentration of ozone gas can be produced at the same voltage, or the same concentration of ozone gas can be produced at a smaller voltage.

The reason why the efficiency of gas production is raised when the interelectrode distances on both the upper and lower sides are matched is because: (1) the upper and lower base members 3 sharing the central member 2 are supplied with a voltage from a single high-voltage power supply (see Figure 1); (2) the high-voltage power supply supplies the upper and lower base members 3 with an identical voltage (does not perform individual voltage control); and (3) from (1) and (2) described above, a high concentration of gas is produced when the distances of the upper and lower discharge spaces are equalized. For example, a high frequency and a high voltage of a voltage of 5 to 15 kV and a frequency of 20 to 40 kHz are applied to a high voltage part. Note that the reason why there is a single high-voltage power supply and why the trench electrodes (the first electrodes 6) are used on both the sides is cost reduction and space saving.

In addition, in the present embodiment, the material gas supply inlet 4 is arranged on the outer side of the first electrode 6, and the generated gas delivery outlet 5 is arranged in the central part of the first electrode **6.** Thus, the material gas flows in the direction from the outside toward the central part. The conductive film 27 of the second electrode 9 is formed at the position corresponding to the first electrode 6 (not formed outside the first electrode 6). Therefore, discharge is produced in the discharge space 12 at the position corresponding to the first electrode 6 to generate generated gas from the material gas. Discharge is not produced outside the first electrode 6, nor is the generated gas generated from the material gas. In this case, the generated gas can be kept from being produced in the vicinity of the sealing member 30 because the sealing member 30 is arranged on the outer side of the first electrode 6, which can prevent the sealing member 30 from being corroded by the generated gas.

In addition, in the present embodiment, the first electrode 6 and the second electrode 9 have a circular shape, the material gas supply inlet 4 is arranged on the radially outer side of the first electrode 6, and the generated gas delivery outlet 5 is arranged on the radially inner side of the first electrode **6.** Thus, the material gas flows in the direction from the radially outer side toward the radially inner side, and discharge is not produced on the radially outer side of the first electrode 6, nor is the generated gas generated from the material gas. In this case, the generated gas can be kept from being produced in the vicinity of the sealing member 30 because the sealing member 30 is arranged on the radially outer side of the first electrode 6, which can prevent the sealing member 30 from being corroded by the generated gas.

Although the embodiment of the present invention has been described above by showing examples, the scope of the present invention is not limited to them and can be changed or modified depending on the purpose within the scope recited in claims.

For example, the example in which ozone gas is generated by producing discharge between the electrodes has been described in the above description, but the present invention is not limited to ozone gas and can be implemented for any other generated gas that can be generated by producing discharge between the electrodes.

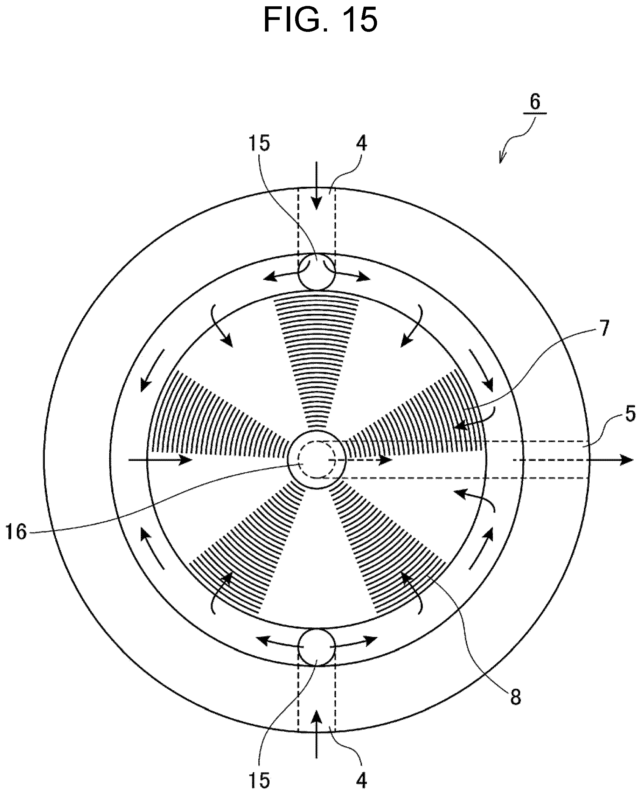

In addition, the example in which the first electrode 6 is provided with the single material gas outlet 15 has been described with reference to Figure 2, but the first electrode 6 may be provided with a plurality of material gas outlets **15.** For example, the first electrode 6 may be provided with two material gas outlets 15 as shown in Figure **15****.**
**[1a]**
   A gas generation device including:
   a central member including a first electrode having a first electrode surface;
   a base member including a second electrode having a second electrode surface opposed to the first electrode surface; and
   a discharge space formed between the first electrode surface and the second electrode surface, in which
   the central member includes
      a material gas supply inlet for supplying the discharge space with material gas, and
      a generated gas delivery outlet for delivering, to outside the device, generated gas generated from the material gas due to discharge produced in the discharge space when a voltage is applied across the first electrode surface and the second electrode surface,
   the second electrode is composed of a dielectric plate having a front surface to be the second electrode surface and a conductive film formed at a position corresponding to the first electrode on a rear surface of the dielectric plate opposite to the second electrode surface,
   a sealing member is arranged between the dielectric plate and the central member,
   the material gas supply inlet is arranged on an outer side of the first electrode,
   the generated gas delivery outlet is arranged in a central part of the first electrode,
   the sealing member is arranged on the outer side of the first electrode and on the outer side of the material gas supply inlet,
   a shim member insertion part in which a shim member for adjusting an interelectrode distance between the first electrode surface and the second electrode surface into a predetermined reference distance is to be inserted is formed between the central member and the base member,
   the shim member is arranged on the outer side of the sealing member,
   a shim member having a thickness equal to a sum of a distance from an end surface of the shim member insertion part that faces the base member to the second electrode surface and the reference distance is selected as the shim member to be inserted in the shim member insertion part from among the plurality of shim members having thicknesses different from one another.
[2a]
   The gas generation device according to [1a], in which
   the first electrode and the second electrode have a circular shape,
   the material gas supply inlet is arranged on a radially outer side of the first electrode,
   the generated gas delivery outlet is arranged on a radially inner side of the first electrode, and
   the sealing member is arranged on the radially outer side of the first electrode.
[3a]
   An interelectrode distance adjustment method to be performed in a gas generation device including a central member and a pair of base members arranged on both upper and lower sides of the central member, in which
   the central member includes a first electrode having a first electrode surface on each of both the upper and lower sides,
   the base members each include a second electrode having a second electrode surface opposed to the first electrode surface,
   a first shim member insertion part is formed between one base member of the pair of base members and the central member,
   a second shim member insertion part is formed between the other base member of the pair of base members and the central member,
      the adjustment method including the steps **of:**
      measuring, for the one base member, a distance from an end surface of the first shim member insertion part that faces the base member to the second electrode surface;
      selecting a shim member having a thickness equal to a sum of the distance from the end surface of the first shim member insertion part that faces the base member to the second electrode surface and the reference distance as a first shim member from among a plurality of shim members having thicknesses different from one another;
      inserting the selected first shim member in the first shim member insertion part;
      measuring, for the other base member, a distance from an end surface of the second shim member insertion part that faces the base member to the second electrode surface;
      selecting a shim member having a thickness equal to a sum of the distance from the end surface of the second shim member insertion part that faces the base member to the second electrode surface and the reference distance as a second shim member from among the plurality of shim members having thicknesses different from one another; and
      inserting the selected second shim member in the second shim member insertion part.
[1b]
   A gas generation device including a central member and a pair of base members arranged on both upper and lower sides of the central member, in which
   the central member includes a first electrode having a first electrode surface on each of both the upper and lower sides,
   the base members each include a second electrode having a second electrode surface opposed to the first electrode surface,
   a discharge space is formed between the first electrode surface and the second electrode surface, and
   an interelectrode distance between the first electrode surface on the upper side of the central member and the second electrode surface and an interelectrode distance between the first electrode surface on the lower side of the central member and the second electrode surface are configured to be equal.
[2b]
   The gas generation device according to [1b], in which a shim member insertion part in which a shim member for adjusting the interelectrode distance between the first electrode surface and the second electrode surface into a predetermined reference distance is to be inserted is formed between the central member and each of the base members.
[3b]
   The gas generation device according to [1b], in which a shim member having a thickness equal to a sum of a distance from an end surface of the shim member insertion part that faces a corresponding one of the base members to the second electrode surface and the reference distance is selected as the shim member to be inserted in the shim member insertion part from among the plurality of shim members having thicknesses different from one another.
[4b]
   The gas generation device according to [1b], in which
   a plurality of trench grooves are formed on the first electrode, and
   a pitch of the trench grooves is set at 0.3 mm to 1.5 mm.
[5b]
   The gas generation device according to [1b], in which
   the central member is provided with a material gas supply inlet for supplying the discharge space with material gas, and
   the first electrode is provided with two material gas outlets communicating with the material gas supply inlet.
[6b]
   The gas generation device according to [5b], in which
   the central member is provided with a generated gas delivery outlet for delivering, to outside the device, generated gas generated from the material gas due to discharge produced in the discharge space when a voltage is applied across the first electrode surface and the second electrode surface,
   the first electrode is provided with a generated gas inlet communicating with the generated gas delivery outlet,
   the material gas supply inlet and the material gas outlet are arranged on a radially outer side of the discharge space,
   the generated gas inlet is arranged on a radially inner side of the discharge space, and
   the generated gas delivery outlet is arranged on the radially outer side of the discharge space.
[7b]
   The gas generation device according to [1b], in which the second electrode is composed of a dielectric plate having a front surface to be the second electrode surface and a conductive film formed at a position corresponding to the first electrode on a rear surface of the dielectric plate opposite to the second electrode surface.
[8b]
   The gas generation device according to [7b], in which
   a sealing member is arranged between the dielectric plate and the central member, and
   the sealing member is arranged on the outer side of the first electrode.
[9b]
   The gas generation device according to [8b], in which the shim member is arranged on the outer side of the sealing member.
[1c]
   A gas generation device including a central member and a pair of base members arranged on both upper and lower sides of the central member, in which
   the central member includes a first electrode having a first electrode surface on each of both the upper and lower sides,
   the base members each include a second electrode having a second electrode surface opposed to the first electrode surface,
   a discharge space is formed between the first electrode surface and the second electrode surface, and
   an identical voltage is configured to be supplied from a single high-voltage power supply across the electrodes between the first electrode surface and the second electrode surface.
[2c]
   The gas generation device according to [1c], in which an interelectrode distance between the first electrode surface on the upper side of the central member and the second electrode surface and an interelectrode distance between the first electrode surface on the lower side of the central member and the second electrode surface are configured to be equal.
[3c]
   The gas generation device according to [2c], in which a shim member insertion part in which a shim member for adjusting the interelectrode distance between the first electrode surface and the second electrode surface into a predetermined reference distance is to be inserted is formed between the central member and each of the base members.
[4c]
   The gas generation device according to [3c], in which a high frequency and a high voltage of a voltage of 5 to 15 kV and a frequency of 20 to 40 kHz are applied from the high-voltage power supply.

### Industrial Applicability

As described above, the gas generation device according to the present invention has the effect of enabling the efficiency of generated gas production to be further raised and is usable as an ozone gas generation device that generates ozone gas, for example, or the like.

### Reference Signs List

- 1: gas generation device
- 2: central member
- 3: base member
- 4: material gas supply inlet
- 5: generated gas delivery outlet
- 6: first electrode
- 7: first electrode surface
- 8: trench groove
- 9: second electrode
- 10: insulating plate
- 11: second electrode surface
- 12: discharge space
- 13: cable
- 14: cooling flow channel
- 15: material gas outlet
- 16: generated gas inlet
- 17: gas introducing space
- 18: entrance part
- 19: exit part
- 20: cooling part
- 21: first partial flow channel
- 22: second partial flow channel
- 23: third partial flow channel
- 24: fourth partial flow channel
- 25: fifth partial flow channel
- 26: dielectric plate
- 27: conductive film
- 28: shim member
- 29: shim member insertion part
- 30: sealing member

## Claims

1. A gas generation device comprising:
a first electrode having a first electrode surface;
a second electrode arranged on an outer side of the first electrode and having a second electrode surface opposed to the first electrode surface;
a discharge space formed between the first electrode surface and the second electrode surface;
a material gas supply inlet for supplying the discharge space with material gas; and
a generated gas delivery outlet for delivering, to outside the device, generated gas generated from the material gas due to discharge produced in the discharge space when a voltage is applied across the first electrode surface and the second electrode surface,
wherein
a plurality of trench grooves are formed on the first electrode,
the discharge space is connected to a gas introducing space for introducing the material gas through the material gas supply inlet,
a ratio P/D of a pitch P of the trench grooves to a diameter D of the first electrode is set at 0.0020 to 0.0150, and
a ratio VT/VG of a volume VT of the trench space formed by the trench grooves to a volume VG of the gas introducing space is set at 0.016 to 0.203.

2. The gas generation device according to claim 1, wherein
the ratio P/D of the pitch P of the trench grooves to the diameter D of the first electrode is set at 0.0023 to 0.0055, and
the ratio VT/VG of the volume VT of the trench space formed by the trench grooves to the volume VG of the gas introducing space is set at 0.018 to 0.176.

3. The gas generation device according to claim 1 or 2, wherein
the first electrode and the second electrode have a circular shape as seen in plan view, and the plurality of trench grooves are arranged concentrically as seen in plan view, and
the discharge space has a circular shape as seen in plan view, and the gas introducing space is arranged on a radially outer side of the discharge space as seen in plan view.

4. A gas generation device comprising:
a first electrode having a first electrode surface;
a second electrode arranged on an outer side of the first electrode and having a second electrode surface opposed to the first electrode surface;
a discharge space formed between the first electrode surface and the second electrode surface;
a material gas supply inlet for supplying the discharge space with material gas;
a generated gas delivery outlet for delivering, to outside the device, generated gas generated from the material gas due to discharge produced in the discharge space when a voltage is applied across the first electrode surface and the second electrode surface; and
a base member arranged on an outer side of the second electrode, wherein
a cooling flow channel through which a cooling medium is caused to flow is formed in the base member,
the cooling flow channel includes an entrance part through which the cooling medium flows into the base member, an exit part through which the cooling medium flows out of the base member, and a cooling part provided between the entrance part and the exit part,
a ratio d1/d2 of a flow channel diameter d1 of the entrance part to a flow channel diameter d2 of the cooling part is set at 0.25 to 1.0 as seen in cross section of the flow channel, and
a ratio d2/d3 of the flow channel diameter d2 of the cooling part to a flow channel diameter d3 of the exit part is set at 1.0 to 4.0 as seen in cross section of the flow channel.

5. A gas generation device comprising:
a first electrode having a first electrode surface;
a second electrode arranged on an outer side of the first electrode and having a second electrode surface opposed to the first electrode surface;
a discharge space formed between the first electrode surface and the second electrode surface;
a material gas supply inlet for supplying the discharge space with material gas;
a generated gas delivery outlet for delivering, to outside the device, generated gas generated from the material gas due to discharge produced in the discharge space when a voltage is applied across the first electrode surface and the second electrode surface; and
a base member arranged on an outer side of the second electrode, wherein
a cooling flow channel through which a cooling medium is caused to flow is formed in the base member,
the cooling flow channel includes an entrance part through which the cooling medium flows into the base member, an exit part through which the cooling medium flows out of the base member, and a cooling part provided between the entrance part and the exit part, and
a ratio S1/S2 of an area S1 of the cooling part of the cooling flow channel to an area S2 of the first electrode is set at 0.45 to 0.93 as seen in plan view.

6. The gas generation device according to claim 4 or 5, wherein
the base member has a circular shape as seen in plan view,
the cooling part of the cooling flow channel includes
a first partial flow channel connected to the entrance part and having an arc shape concentric with the base member,
a second partial flow channel connected to the first partial flow channel and arranged farther radially inward than the first partial flow channel, the second partial flow channel having a radius of curvature smaller than that of the first partial flow channel and having an arc shape concentric with the base member, and
a third partial flow channel connected to the second partial flow channel and arranged farther radially outward than the second partial flow channel, the third partial flow channel having a radius of curvature larger than that of the second partial flow channel and having an arc shape concentric with the base member.

7. The gas generation device according to claim 6, wherein
the cooling part of the cooling flow channel further includes
a fourth partial flow channel connected to the third partial flow channel and arranged farther radially outward than the third partial flow channel, the fourth partial flow channel having a radius of curvature larger than that of the third partial flow channel and having an arc shape concentric with the base member, and
a fifth partial flow channel connected to the fourth partial flow channel and arranged farther radially outward than the fourth partial flow channel, the fifth partial flow channel having a radius of curvature larger than that of the fourth partial flow channel and having an arc shape concentric with the base member.
